**Europäisches Patentamt**

**European Patent Office**

**Office européen des brevets**

(19)

(11) **EP 1 362 889 A1**

(12) **DEMANDE DE BREVET EUROPEEN**

| | |
|---|---|
| (43) Date de publication:<br>**19.11.2003 Bulletin 2003/47** | (51) Int Cl.⁷: **C08L 19/00**, B60R 13/08,<br>E04B 1/82 |

(21) Numéro de dépôt: **02291200.0**

(22) Date de dépôt: **15.05.2002**

(84) Etats contractants désignés:
**AT BE CH CY DE DK ES FI FR GB GR IE IT LI LU
MC NL PT SE TR**
Etats d'extension désignés:
**AL LT LV MK RO SI**

(71) Demandeur: **Polynauve S.A.R.L.**
**94667 Orly Cedex (FR)**

(72) Inventeur: **Garderes, Philippe**
**64290 Gan (FR)**

(74) Mandataire: **Burtin, Jean-François**
**Cabinet GEFIB,**
**55, rue Aristide Briand**
**92300 Levallois-Perret Cedex (FR)**

(54) **Matériaux de récupération à base de caoutchouc recycle, son procédé de préparation et ses utilisations**

(57)    La présente invention se rapporte au domaine des matériaux de construction et plus particulièrement à celui des produits d'insonorisation.

Elle a précisément pour objet une masse lourde insonorisante présentée en plaques minces ou sous forme de boudins, caractérisée en ce qu'elle est constituée de caoutchouc cru recyclé ou recyclable, additionné de poudrette de caoutchouc de pneu ou de caoutchouc vulcanisé, de matières plastiques et/ou de polyoléfines recyclées ainsi qu'éventuellement d'huile et/ou de matières de charge. Ce matériau est préparé par extrusion.

Utilisation dans l'industrie automobile ou du bâtiment comme matériau insonorisant.

**EP 1 362 889 A1**

**Description**

La présente invention se rapporte au domaine des matériaux de construction et plus particulièrement à celui des produits d'insonorisation.

L'invention se rapporte plus précisément à un matériau de récupération recyclable, insonorisant, à base de caoutchouc.

L'invention concerne spécifiquement une masse lourde insonorisante recyclée et recyclable caractérisée en ce qu'elle est constituée de caoutchouc cru, recyclé ou à recycler, de pneu ou de caoutchouc vulcanisé, et de matières plastiques et/ou de poly oléfines.

On entend par masse lourde une matière de consommation intermédiaire très utile dans l'industrie automobile pour l'insonorisation des habitacles et des parties sonores des véhicules à moteur.

Ce matériau est dénommé masse lourde du fait qu'il est formé d'une feuille de mélange de caoutchouc d'épaisseur variable allant de 0,1 à 6mm capable d'absorber les vibrations sonores et/ou mécaniques provoquées ou transmises par un moteur ou tout autre dispositif générant des fréquences sonores ou des vibrations. Cette masse constitue une sorte d'écran qui absorbe ou amortit les vibrations. Cette masse lourde est principalement destinée au domaine du bâtiment pour insonoriser les parois ou les cloisons. Elle convient également dans l'industrie automobile, dans l'industrie navale et pour le matériel ferroviaire pour atténuer les bruits ou les vibrations.

Ce matériau se présente sous forme de plaques, de boudins ou de rouleaux. Il est mis en oeuvre selon le principe dit de "mélangeage" en continu qui est en général appliqué au domaine des matières plastiques thermoplastiques et/ou du caoutchouc, donc par association d'un appareil de pré-mélange et d'une extrudeuse.

On peut ainsi incorporer dans le matériau de base une forte proportion de poudrette résultant du broyage en petits morceaux de pneumatiques usagés et/ou de tout autre déchet de caoutchouc vulcanisé.

On sait l'importance du problème présenté par l'existence de déchets et de résidus de fabrication industriels. Ce problème est nettement plus aigu pour les matières plastiques dont la combustion ne peut être envisagée en raison de la formation de produits toxiques ou dangereux comme l'acide chlorhydrique formé à partir du chlorure de polyvinyle.

Il en est de même pour les résidus de caoutchouc et les fabricants de pneus cherchent de tous côtés des utilisateurs pour le caoutchouc recyclé.

La récupération de tous ces déchets industriels présente donc un grand intérêt économique, toxicologique et écologique.

Elle évite en effet d'avoir à stocker des quantités importantes de produits de rebut provenant notamment de l'industrie automobile et permet de réutiliser des manières premières dont la valeur résiduelle est faible mais n'est pas nulle.

C'est pourquoi la fabrication de matériau lourd selon l'invention présente l'avantage de réutiliser des pneumatiques usagés et du caoutchouc vulcanisé. La fabrication selon l'invention permet également la récupération de matières plastiques telles que polystyrène, polyéthylène ou polypropylène dont l'incorporation permet de trouver une utilisation importante, évitant ainsi la destruction de matériaux gênants.

Le matériau lourd insonorisant selon l'invention se caractérise par le fait qu'on y incorpore du caoutchouc cru recyclé ou à recycler, issu de l'industrie automobile, dans une proportion variant de 0 à 50 % de la masse totale et de préférence de 30 à 35 %, de la poudrette de pneu usagé ou de caoutchouc vulcanisé dans une proportion variant de 0 à 60 % de la masse totale et de préférence de 40 à 50 %, des polyoléfines du type polyéthylène ou acétate de polyvinyle et/ou des matières plastiques comme le chlorure de polyvinyle ou le polystyrène, dans une proportion variant de 0 à 30 % et de préférence de 5 à 25 % de la masse totale. Le matériau lourd inclut également une petite quantité d'huile variant de 0 à 15 % de la masse totale et de préférence de 5 à 15 % de la masse totale pour assurer une élasticité suffisante au matériau isolant.

En outre on peut incorporer au matériau isolant une quantité réduite de charge pour améliorer l'aspect du produit ou pour assurer une bonne tenue du matériau ou pour garantir son absence d'inflammabilité. La teneur en matériau de charge varie de 0 à 25 % en poids.

De préférence, les charges qu'on incorpore dans le matériau isolant selon l'invention sont des charges minérales telles que de la craie, des silicates, de la silice, des argiles, on peut également ajouter du mica ou du graphite ou du feldspath pour colorer ou modifier l'apparence du matériau.

L'invention concerne également un procédé de fabrication de matériau insonorisant qui consiste en ce qu'on effectue un pré-mélange des matières premières dans un mélangeur rapide. On procède à un nouveau pré-mélange des constituants dans une cuve à rotor pourvue de deux vis de brassage, on mélange d'une manière homogène dans une extrudeuse à une vis jusqu'à complète homogénéisation, puis on procède à l'extrusion de la masse en plaques fines ou sous forme d'un boudin qu'on découpe à la sortie de l'extrudeuse à l'aide d'un appareil tranchant.

La masse extrudée est ensuite soumise à un contrôle puis conditionnée sous la forme désirée.

Le matériau insonorisant selon l'invention tel qu'il est obtenu présente les caractéristiques suivantes :

- densité variant de 1 à 1,8 kg/dm$^3$

- la dureté Shore A varie de 30 à 70
- la thermoformabilité est excellente
- la résistance au déchirement est bonne à élevée

Le matériau insonorisant selon l'invention se présente sous la forme de feuilles de quelques millimètres d'épaisseur, et de préférence de 0,1 à 6 mm d'épaisseur.

Elle est destinée à être thermoformée pour garnir l'intérieur des portières et des capots des véhicules automobiles. Ce matériau peut également garnir la malle arrière des autos de façon à assurer le maximum d'insonorisation à l'habitacle du véhicule.

Le matériau insonorisant trouve également un emploi dans l'industrie du bâtiment en particulier en assurant l'insonorisation des cloisons en plâtre, en ciment ou en béton par interposition d'une feuille mince entre deux parois.

On peut également utiliser le matériau selon l'invention sous forme de feuilles pour assurer l'insonorisation des parois dans les laboratoires, dans les studios d'enregistrement ou dans les bâtiments scolaires ou universitaires pour éviter la propagation des sons ou des bruits.

Chaque fois que cela est nécessaire, la proportion de matières de charge inertes ou ignifugeante pourra être augmentée de manière à assurer une meilleure résistance au feu ou à la chaleur.

L'invention concerne donc l'utilisation du matériau insonorisant selon l'invention comme isolant dans les véhicules automobiles et en particulier pour l'insonorisation des portières, des capots et/ou des coffres arrière.

L'invention concerne aussi l'utilisation du matériau insonorisant selon l'invention dans l'industrie de la construction pour réaliser l'amortissement des bruits ou l'insonorisation des locaux commerciaux, industriels, ou de tout type de logement individuel ou collectif.

L'invention concerne encore l'utilisation du matériau insonorisant selon l'invention sous forme de plaque souple dans l'industrie ferroviaire, navale ou aéronautique pour atténuer les vibrations des cloisons et assurer une bonne insonorisation.

Les exemples suivants illustrent l'invention sans toutefois la limiter.

## EXEMPLES

Préparation du matériau lourd insonorisant

### Exemple 1

Composition

| | |
|---|---|
| - caoutchouc cru recyclé | 32 Kg |
| - poudrette de pneu | 45 Kg |
| - poly oléfines recyclée à base de copolymère polyéthylène/acétate de vinyle | 10 Kg |
| - Huile paraffinique | 18 Kg |
| - Charges minérales (craie, oxyde de fer jaune) | 5 Kg |
| pour | $\overline{110}$ kg |

La masse homogénéisée est extrudée en plaques de 3mm d'épaisseur

### Exemple 2

**Composition**

| | |
|---|---|
| - caoutchouc cru recyclé | 35 Kg |
| - poudrette de pneu | 50 Kg |
| - polystyrène récupéré | 5 Kg |
| - Huile naphténique | 5 Kg |

(suite)

| - Charges | 0 Kg |
|---|---|
| pour | $\overline{95}$ kg |

La masse est extrudée dans une extrudeuse à double vis. La masse découpée en boudin est destinée au calandrage.

## Revendications

**1.**   Masse lourde insonorisante **caractérisée en ce qu'**elle est constituée de caoutchouc cru recyclé, de poudrette de caoutchouc de pneu ou de caoutchouc vulcanisé et de matières plastiques et/ou de poly oléfines.

**2.**   Masse lourde insonorisante selon la revendication 1, **caractérisée en ce qu'**elle incorpore en outre une huile minérale paraffinique, naphténique ou aromatique.

**3.**   Masse lourde insonorisante selon la revendication 1 ou 2, **caractérisée en ce qu'**elle incorpore en outre des matériaux de charge.

**4.**   Masse lourde insonorisante selon l'une des revendications précédentes, **caractérisée en ce qu'**on utilise du caoutchouc cru provenant des articles en caoutchouc des véhicules automobiles.

**5.**   Masse lourde insonorisante selon l'une des revendications précédentes, **caractérisée en ce que** la poudrette de caoutchouc de pneu est le produit pulvérulent qui résulte du déchiquetage et du broyage des pneus usagés ou d'articles vulcanisés en caoutchouc.

**6.**   Masse lourde insonorisante selon l'une des revendications précédentes, **caractérisée en ce que** celle-ci se présente sous forme de plaques, de boudins ou de rouleaux..

**7.**   Masse lourde insonorisante selon la revendication 1 ou 2 **caractérisée en ce qu'**elle contient du caoutchouc recyclé ou à recycler issu de l'industrie automobile dans une proportion allant de 0 à 50 % de la masse totale, de la poudrette de pneu ou d'articles de caoutchouc vulcanisés dans une proportion variant de 0 à 60 % de la masse totale, des polyoléfines du type polyéthylène ou acétate de polyvinyle ou des matières plastiques dans une proportion variant de 0 à 30 %.

**8.**   Masse lourde insonorisante selon la revendication 1 ou la revendication 2, dans lequel la quantité d'huile varie de 0 à 15 % de la masse totale.

**9.**   Masse lourde insonorisante selon l'une des revendications précédentes, qui présente les caractéristiques suivantes :

- densité variant de 1 à 1,8 kg/dm$^3$
- la dureté Shore A varie de 30 à 70
- la thermoformabilité est excellente
- la résistance au déchirement est bonne à élevée

**10.**  Procédé d'obtention de la masse lourde insonorisante selon l'une des revendications 1 à 9 précédentes, **caractérisé en ce qu'**on effectue un pré-mélange du caoutchouc cru, de la poudrette de pneu et des déchets de matières plastiques dans un mélangeur rapide, on procède à un nouveau pré-mélange des constituants dans un cuve à rotor pourvue de deux vis de brassage, on mélange d'une manière homogène dans une extrudeuse à vis jusqu'à complète homogénéité du mélange et on procède à l'extrusion de la masse en plaques fines ou sous forme d'un boudin qu'on découpe à la sortie de l'extrudeuse à l'aide d'un appareil tranchant.

**11.**  Utilisation de la masse lourde insonorisante selon l'une des revendications 1 à 9 dans l'industrie automobile pour insonoriser l'intérieur des portières, le capot et/ou la malle arrière des véhicules.

12. Utilisation de la masse lourde insonorisante selon l'une des revendications 1 à 9 dans l'industrie du bâtiment en particulier en assurant l'insonorisation des cloisons en plâtre, en ciment ou en béton.

EP 1 362 889 A1

Office européen
des brevets

**RAPPORT DE RECHERCHE EUROPEENNE**

Numéro de la demande

EP 02 29 1200

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 780 430 A (NAT RUBBER TECH INC) 25 juin 1997 (1997-06-25) * abrégé; revendications; exemples * * page 2, ligne 48 - ligne 53 * * page 4, ligne 12 - ligne 13 * | 1-10 | C08L19/00 B60R13/08 E04B1/82 |
| X | DE 37 40 239 A (SEMPERIT AG) 28 juillet 1988 (1988-07-28) * abrégé; revendications; exemples * * page 2, ligne 28 - ligne 62 * | 1-12 | |
| X | GB 2 112 399 A (BRITISH PETROLEUM CO PLC) 20 juillet 1983 (1983-07-20) * abrégé; revendications; tableau 1 * * page 2, ligne 56 - page 3, ligne 2 * | 1-12 | |
| X | DE 22 29 169 A (DUNLOP AG) 10 janvier 1974 (1974-01-10) * exemples 2,4 * | 1,3,5-8, 10 | |

DOMAINES TECHNIQUES
RECHERCHES (Int.Cl.7)

C08L

Le présent rapport a été établi pour toutes les revendications

| Lieu de la recherche | Date d'achèvement de la recherche | Examinateur |
|---|---|---|
| LA HAYE | 2 octobre 2002 | Mettler, R-M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

6

**ANNEXE AU RAPPORT DE RECHERCHE EUROPEENNE
RELATIF A LA DEMANDE DE BREVET EUROPEEN NO.**     EP 02 29 1200

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-10-2002

| Document brevet cité au rapport de recherche | | Date de publication | Membre(s) de la famille de brevet(s) | | Date de publication |
|---|---|---|---|---|---|
| EP 0780430 | A | 25-06-1997 | US | 5510419 A | 23-04-1996 |
| | | | EP | 0780430 A1 | 25-06-1997 |
| | | | CA | 2158422 A1 | 17-03-1996 |
| DE 3740239 | A | 28-07-1988 | AT | 386830 B | 25-10-1988 |
| | | | AT | 7087 A | 15-03-1988 |
| | | | DE | 3740239 A1 | 28-07-1988 |
| GB 2112399 | A | 20-07-1983 | DE | 3245648 A1 | 23-06-1983 |
| | | | FR | 2518103 A1 | 17-06-1983 |
| DE 2229169 | A | 10-01-1974 | DE | 2229169 A1 | 10-01-1974 |
| | | | GB | 1382749 A | 05-02-1975 |

EPO FORM P0460

Pour tout renseignement concernant cette annexe : voir Journal Officiel de l'Office européen des brevets, No.12/82